Europäisches Patentamt

European Patent Office

Office européen des brevets

(11) Publication number: **0 399 922**
**A1**

## (12) EUROPEAN PATENT APPLICATION

(21) Application number: 90420220.7

(22) Date of filing: 10.05.90

(51) Int. Cl.5: **C08L 67/02, C08K 5/09,**
**//(C08L67/02,23:00,23:02)**

(30) Priority: **15.05.89 US 351494**

(43) Date of publication of application:
**28.11.90 Bulletin 90/48**

(84) Designated Contracting States:
**GR**

(71) Applicant: **EASTMAN KODAK COMPANY**
**343 State Street**
**Rochester, New York 14650(US)**

(72) Inventor: **Light, Ronald Richard c/o EASTMAN**
**KODAK COMPANY**
**Patent Department 343 State Street**
**Rochester New York 14650(US)**
Inventor: **McGill, Jennifer Ann L., c/o**
**EASTMAN KODAK COMPAN**
**Patent Department 343 State Street**
**Rochester New York 14650(US)**

(74) Representative: **Parent, Yves et al**
**Kodak-Pathé Département Brevets et**
**Licences Centre de Recherches et de**
**Technologie Zone Industrielle**
**F-71102 Chalon-sur-Saône Cédex(FR)**

(54) **Reinforced polyester molding compositions.**

(57) Disclosed are reinforced polyester molding compositions containing as an impact modifier, a combination of an ionic hydrocarbon copolymer and a low molecular weight polyolefin.

EP 0 399 922 A1

## REINFORCED POLYESTER MOLDING COMPOSITIONS

Technical Field

This invention relates to reinforced polyester molding compositions containing a combination of impact modifiers, i.e., a salt of an ionic hydrocarbon copolymer and a low molecular weight polyolefin.

Background of the Invention

Polyesters are characterized by excellent physical properties which make them of interest for high performance molding plastics. Reinforcing materials such as glass fibers and mica are frequently incorporated into the polymer in order to improve the mechanical properties of the product. Furthermore, the relatively slow crystallization rate of polyesters has prompted much work into nucleation and crystallization promoters which would allow practical injection molding of polyesters and their reinforced blends. It has long been known that specific nucleating agents and plasticizers when added to reinforced polyesters will enhance the moldability of the compositions with molds heated from 90°C to 150°C. U.S. Patents 3,435,093, 3,368,995, 3,516,957, 4,351,757, 4,352,904 and 4,357,268 describe the use of various nucleating agents such as an alkali metal salt of an ionic hydrocarbon copolymer of an alpha-olefin of 2-5 carbon atoms and an alpha-beta-ethylenically unsaturated carboxylic acid of 3-5 carbon atoms in which the carboxyl groups have been partially neutralized. U.S. Patents 3,960,807 and 4,463,121 both address the art of adding a polyolefinic material to the composition of a thermoformed, non-oriented, heat-set, thin-walled article to improve toughness. U.S. Patent 3,960,807 relates to a polyester article based on polyester containing 2 to 16% of a crack stopping agent and from 0.01 to 20% of a nucleating agent. The crack stopping agent consists of a polyolefinic material and the nucleating agent is based on titanium dioxide. U.S. Patent 4,463,121 discloses a thermoformed, non-oriented, heat-set, thin-walled article composed of about 98 to 93 wt % poly(ethylene terephthalate) combined with 2 to 5 wt % of a polyolefin containing 2 to 6 carbon atoms, and optionally, a small amount of a heat stabilizer.

None of these references disclose or suggest the synergistic effects of the combination of a low molecular weight polyolefin with a neutralized ionic hydrocarbon copolymer on the impact strength of reinforced polyesters, which is the basis of the present invention.

Description of the Invention

According to the present invention there is provided a reinforced molding composition comprising at least one polyester selected from poly(ethylene terephthalate) [PET], poly(butylene terephthalate) [PBT] and poly(cyclohexylene dimethylene terephthalate) [PCT], 10-50% based on the weight of polyester of glass fibers, and an impact strengthener comprising (a) 0.1 to 10%, based on the weight of polyester of at least one sodium or potassium salt of a hydrocarbon carboxylic acid of 7-25 carbon atoms or at least one sodium or potassium salt of an ionic hydrocarbon copolymer of an $\alpha$-olefin of 2-5 carbon atoms and an $\alpha,\beta$-ethylenically unsaturated carboxylic acid of 3-5 carbon atoms in which the carboxyl groups have been at least partially neutralized with Na$^+$ or K$^+$ cations, and (b) 0.5 to 8% based on the weight of the polyester of a polyolefin having repeat units from at least one olefin monomer having 2 to 6 carbon atoms and a weight average molecular weight of 1000-20,000.

The polyesters used in the present invention are, of course, well known. Poly(ethylene terephthalate) is a polyester containing repeat units from terephthalic acid and ethylene glycol. Poly(butylene terephthalate) is a polyester containing repeat units from terephthalic acid and 1,4-butanediol. Poly(cyclohexylene dimethylene terephthalate) is a polyester containing repeat units from terephthalic acid and 1,4-cyclohexenedimethanol. These polyesters are produced using conventional techniques, for example as disclosed in U.S. Patent No. 3,733,909.

The polyesters have an inherent viscosity (I.V.) of at least 0.4 dl/g, preferably 0.4-1.0, and may contain minor amounts of up to 20 mol % of modifying dicarboxylic acids and glycols conventionally used in polyesters.

The glass fiber reinforcement concentration used in this invention can vary from 10 wt % to 50 wt %. The glass fibers may be conventional, commercially available fibers having a length of 1 8-2 inches and a diameter of 5-50 microns. In addition to the glass fibers, the composition of this invention may also contain other fillers and additives such as mica, talc, flame retardants, stabilizers, and other processing aids and colorants.

Representative acids for the sodium or potassium salts of a hydrocarbon carboxylic acid are stearic, pelargonic and behenic acids. Representative of the ionic hydrocarbon copolymers are the salts of copolymers of olefins and acrylic or methacrylic acids, or copolymers of aromatic olefins and maleic anhydride. Preferably these materials include the sodium or potassium salt of stearic acid; the sodium or potassium salt of ethylene/methacrylic acid copolymers (including both wholly or partially neutralized salts e.g., at least 30% neutralized), or the sodium salt of styrene/maleic anhydride copolymers (including both wholly or partially neutralized salts e.g., at least 30% neutralized). In the copolymers listed above the olefin or aromatic olefin moiety ordinarily comprises 50-98 percent by weight of the copolymer, and preferably 80-98 percent. An especially preferred material is the sodium salt of ethylene/methacrylic acid copolymer. The copolymers may be prepared by conventional high pressure polymerization technology. Suitable commercially available materials include Surlyn (trademark) 8527 resin, an ethylene/methacrylic acid copolymer (90/10) salt 80% neutralized with sodium and Aclyn (trademark) 285 resin, an ethylene/acrylic acid copolymer (80/20) salt 80% neutralized with sodium.

In practicing this invention, solid low molecular weight polyolefins, such as thermally degraded polyethylene, polypropylene, polybutene, polyallomer, and the like can be used. These polyolefins can be homopolymers or copolymers of the various olefinic monomers.

Polyethylene useful in this invention can be produced by any of the high-pressure or low-pressure processes. The polyethylene can be produced by polymerizing ethylene in the presence of any of the known peroxide catalysts and pressures of 500 atmospheres and higher. A suitable procedure for producing high-pressure polyethylene is included in U.S. 2,153,553.

In carrying out a low-pressure polymerization reaction any of the known catalysts for such reactions can be used. Among the catalysts that can be employed are the aluminum trialkyl type of catalysts. For example, aluminum triethyl admixed with a titanium tetrahalide, such as titanium tetrachloride, or an aluminum triethyl admixed with a vanadium halide, such as vanadium trichloride, can be used.

By way of example, a highly crystalline, high density polyethylene can be formed in a low-pressure process using a catalyst mixture comprising aluminum and titanium tetrachloride. In this process the polymerization reaction is generally carried out in liquid phase in an inert organic liquid, preferably an inert liquid hydrocarbon. The reaction proceeds over a relatively wide temperature range with temperatures of $20^\circ C$ to $200^\circ C$ being preferably employed and particularly good results can be obtained at a temperature within the range of $40^\circ C$ to $160^\circ C$. The reaction pressure may vary from atmospheric pressure to a pressure of 1000 psig (70.3 kg/cm$^2$), although in some instances, considerably higher pressures can be used if they are considered necessary. The inert organic liquid desirably serves as a liquid medium and a solvent for the solid polyethylene at the temperature of polymerization. The great increase in polymerization rate with increasing pressures makes the use of pressures of 300 psig (21 kg/cm$^2$) to 500 psig (35 kg/cm$^2$) quite desirable.

The polyolefin is thermally degraded by heating the polymer for a satisfactory period of time to effect the desired reduction in molecular weight. Generally, the thermal degradation temperature does not exceed $400^\circ C$, and usually the temperature is within the range of $200^\circ C$ to $400^\circ C$. The thermal degradation time can vary considerably depending upon the degree of unsaturation and reduction in molecular weight desired. For example, the thermal degradation time can vary from 10 seconds up to 2 hours. In some instances, it may be desirable or necessary to heat the polymer for as much as 10 hours and more depending on the other conditions and the type of product desired. Normally, the degradation time and temperature are varied to obtain the desired viscosity range of the degraded product and the time-temperature combination is selected to yield the maximum rate of desired product as the most economical reaction conditions.

The thermal degradation is carried out in an inert atmosphere and in the substantial absence of reactive gases, such as oxygen, hydrogen and the like. Inert gases, such as nitrogen, argon, helium, and the like, can be used to blanket the polymer during the thermal degradation reaction.

The thermal degradation can be carried out either batchwise or in a continuous process. In a batch system a stirred vessel containing an inert gas, such as nitrogen, is charged with the polymer to be degraded and the polymer is heated to the desired temperature with adequate agitation and held at that temperature for a specific period of time. Any low boiling products of the thermal degradation reaction can be removed by gas stripping or vacuum stripping of the product. In a continuous system of operation a heated tube or pipe is fed with the polymer to be degraded by an extruder or similar feeding mechanism. The rate of flow and temperature of the heated tube are controlled to give the desired viscosity of the degraded material. The degraded polymer is then gas stripped of low boiling products or vacuum stripped by means of a brush still or other similar vacuum stripping means.

The products of the thermal degradation reaction will vary in molecular weight depending upon the molecular weight of the starting material and upon the reaction conditions employed. The thermally degraded product used in this invention will usually have a weight average molecular weight within the range of 1,000 to 20,000.

The thermally degraded product is contacted with hydrogen in order to reduce the degree of unsaturation of the thermally degraded product. The hydrogenation reaction can be carried out by use of a slurry or fixed bed process and the reaction can be conducted with or without a diluent for the degraded polymer. When a product having a molecular weight within the lower part of the range is desired, the hydrogenation reaction can be readily carried out without a diluent or solvent since waxes are relatively easy to handle in the molten state. However, suitable paraffinic hydrocarbon diluents or solvents can be used if they are desired. The hydrogenation reaction can be carried out using suitable hydrogenation catalysts, for example, Raney nickel, nickel deposited on kieselguhr, nickel deposited on carbon or alumina, palladium deposited on carbon or alumina, sponge nickel, zirconium promoted nickel catalysts, and the like. During the hydrogenation reaction, hydrogen pressures varying from atmospheric up to 6,000 psig (422 kg/cm$^2$) and higher can be used. Preferably, the hydrogen pressure is within the range of 50-2000 psig (3.5-140 kg/cm$^2$). The hydrogenation temperature can vary from 100°C up to 400°C and higher and preferably the temperature is within the range of 150°C to 350°C.

When a slurry process is employed for the hydrogenation reaction the thermally degraded product is melted and mixed thoroughly with the catalyst preferably in a finely divided or powdery form. The resulting mixture can be agitated in a reaction vessel under hydrogen pressure or the mixture can be pumped through a pipe or other elongated reaction vessel with hydrogen introduced to the reactor near the point of entrance of the catalyst-containing mixture. The hydrogenation reaction proceeds for a period of time varying from one-half hour up to 4 hours and higher, and the resulting slurry is filtered to remove catalyst. If desired, it can be pelleted or otherwise placed into a discrete particulate form.

When a fixed bed process is used for the hydrogenation reaction a heated pipe or other elongated reaction vessel is packed with pellets or granules of catalyst and the product of the thermal degradation reaction is pumped through the catalyst bed. Hydrogen is also passed through the catalyst bed, preferably concurrently with the polymer to be hydrogenated. To improve the efficiency of the hydrogenation reaction a recycle of polymer through the bed can be used and subsequently the polymer can be passed through a separate finishing packed bed. The hydrogenated polymer from the fixed bed is substantially free of catalyst but the product can be filtered to remove any traces of catalyst. The resulting product can then be processed in the same manner as the product from a slurry process.

The following examples are submitted for a better understanding of the invention. In the examples, Surlyn 8527 is an ethylene/methacrylic acid copolymer (90/10) salt 80% neutralized with sodium. Epolene (trademark) N14P wax is a thermally degraded, partly unsaturated powdered ethylene homopolymer having a molecular weight of 1800. Epolene N15 wax is a thermally degraded, partly unsaturated propylene homopolymer having a molecular weight of 4500. Phenoxy PKHH resin is a poly(hydroxyether) based on polymerization of bisphenol A with (chloromethyl) oxirane having a molecular weight of 25,000-35,000. Irganox (trademark) 1010 antioxidant is a phenolic antioxidant.

Examples

1. A blend of PET containing 30 wt % glass fiber, 1 wt % Phenoxy PKHH resin and 0.5 wt % Irganox 1010 antioxidant is prepared by melt compounding using a single screw extruder. A second version of this blend is prepared by adding 3 wt % Epolene N14P wax. Both samples are injected molded into a 150°C mold and the resulting bars are used for mechanical property testing. No significant difference in impact strength is seen with the addition of the wax to the reinforced polymer (see Table 1).

2. A blend of PET containing 30 wt % glass fiber, 5 wt % Surlyn 8527 resin, 1 wt % Phenoxy PKHH resin, and 0.5 wt % Irganox 1010 antioxidant is prepared by melt compounding in an extruder. Two other versions of this blend are prepared by adding 1 and 3 wt % Epolene N14P wax. All blends are injection molded in an 80°C mold and the resulting bars are annealed for 2 hours to insure complete crystallization before mechanical property tests are conducted. Surprisingly, the notched and unnotched impact strengths are much higher in the blends containing the wax (see Table 2) with no detrimental effects on any other properties. For example, the notched Izod impact strength at 23°C is increased from 2.3 to 3.2 ft-lb/in. with the addition of 3 wt % wax.

3. A glass fiber reinforced PET control sample as in Example 2 and a blend containing 3 wt % Epolene N15 wax are compounded, molded and tested as above. The notched and unnotched impact are unexpectedly increased with the addition of the polypropylene wax (see Table 3). The notched Izod impact strength at 23°C is increased from 2.3 to 3.0 ft-lb in.

TABLE 1

| Effect of Epolene N14P wax on the mechanical properties of PET having 30 wt % glass fibers, 1 wt % phenoxy PKHH resin, and 0.5 wt % Irganox 1010 antioxidant | | |
|---|---|---|
| Epolene N14P wax, wt % | - | 3 |
| Tensile Strength, psi (kg/cm$^2$) | 26,000 (1828) | 24,500 (1722) |
| Elongation at Break, % | 5 | 5 |
| Flexural Strength, psi (kg/cm$^2$) | 37,800 (2658) | 33,600 (2362) |
| Flexural Modulus, psi (kg/cm$^2$) | 1,460,000 (102,652) | 1,350,000 (94,918) |
| Notched Izod Impact, ft-lb/in. (Joules/meter) | | |
| -40°C | 2.1 (112) | 2.3 (123) |
| 0°C | 2.2 (117.5) | 2.4 (128) |
| 23°C | 2.2 (117.5) | 2.5 (133) |
| Unnotched Izod Impact, ft-lb/in. (Joules/meter) | | |
| -40°C | 13.2 (705) | 14.4 (769) |
| 0°C | 12.4 (662) | 14.4 (769) |
| 23°C | 14.0 (748) | 14.2 (758) |
| Heat Deflection Temperature at 264 psi (18.6 kg/cm$^2$), °C | 226 | 228 |

TABLE 2

| Effect of Epolene N14P wax on the mechanical properties of PET having 30 wt % glass fibers, 5 wt % Surlyn 8527 resin, 1 wt % phenoxy PKHH resin and 0.5 wt % Irganox 1010 antioxidant | | | |
|---|---|---|---|
| Epolene N14P wax, wt % | - | 1 | 3 |
| Tensile Strength, psi (kg/cm$^2$) | 27,200 (1912) | 25,500 (1792) | 26,600 (1870) |
| Elongation at Break, % | 6 | 6 | 6 |
| Flexural Strength, psi (kg/cm$^2$) | 40,900 (2875) | 40,500 (2848) | 39,000 (2742) |
| Flexural Modulus, psi (kg/cm$^2$) | 1,490,000 (104,761) | 1,430,000 (100,543) | 1,360,000 (95,621) |
| Notched Izod Impact, ft-lb/in. (Joules/meter) | | | |
| -40°C | 2.3 (123) | 2.7 (144) | 3.3 (176) |
| 23°C | 2.3 (123) | 2.6 (138) | 3.2 (170) |
| Unnotched Izod Impact, ft-lb/in. (Joules/meter) | | | |
| -40°C | 14.4 (769) | 17.9 (956) | 22.7 (1212) |
| 23°C | 16.5 (881) | 17.4 (929) | 22.2 (1185) |
| Heat Deflection Temperature at 264 psi (18.6 kg/cm$^2$), °C | 217 | 227 | 228 |

TABLE 3

| Effect of Epolene N15 wax on the mechanical properties of PET having 30 wt % glass fibers, 5 wt % Surlyn 8527 resin, 1 wt % phenoxy PKHH resin and 0.5 wt % Irganox 1010 antioxidant | | | |
|---|---|---|---|
| Epolene N15 wax, wt % | - | 1 | 3 |
| Tensile Strength, psi (kg/cm$^2$) | 27,200 (1912) | 25,000 (1757) | 23,200 (1631) |
| Elongation at Break, % | 6 | 6 | 6 |
| Flexural Strength, psi (kg/cm$^2$) | 40,900 (2875) | 37,900 (2665) | 34.800 (2447) |
| Flexural Modulus, psi (kg/cm$^2$) | 1,490,000 (104,761) | 1,410,000 (99,137) | 1,350,000 (94,918) |
| Notched Izod Impact, ft-lb/in. (Joules/meter) | | | |
| -40°C | 2.3 (123) | 2.5 (133) | 3.0 (160) |
| 23°C | 2.3 (123) | 2.5 (133) | 3.0 (160) |
| Unnotched Izod Impact, ft-lb/in. (Joules/meter) | | | |
| -40°C | 14.4 (769) | 19.0 (1014) | 16.2 (865) |
| 23°C | 16.5 (881) | 18.0 (961) | 17.0 (908) |
| Heat Deflection Temperature at 264 psi (18.6 kg/cm$^2$), °C | 217 | 220 | 231 |

As used herein, the inherent viscosity (I.V.) is measured at 25°C using 0.50 g of polymer per 100 mL of a solvent consisting of 60% by weight phenol and 40% by weight tetrachloroethane.

The tests used herein for determination of mechanical properties are described as follows:

| Melt Flow Rate or Index | ASTM D1238-79 |
|---|---|
| Tensile Strength | ASTM D638-80 |
| Elongation at Fracture | ASTM D638-80 |
| Flexural Modulus | ASTM D790-80 |
| Flexural Strength | ASTM D790-80 |
| Izod Impact | ASTM D256-81 |
| Heat Deflection Temperature, °C | ASTM D648-72 |

Unless otherwise specified, all parts, percentages, ratios, etc., are by weight. Weight of reinforcing glass fibers and nucleating agent(s) are based on total composition weight.

## Claims

1. Reinforced molding composition comprising at least one polyester selected from poly(ethylene terephthalate), poly(butylene terephthalate) and poly(cyclohexylene dimethylene terephthalate), 10-50% based on the weight of polyester of glass fibers, and an impact strengthener characterized by having

(a) 0.1 to 10%, based on the weight of polyester of at least one sodium or potassium salt of a hydrocarbon carboxylic acid of 7-25 carbon atoms or at least one sodium or potassium salt of an ionic hydrocarbon copolymer of an $\alpha$-olefin of 2-5 carbon atoms and an $\alpha,\beta$-ethylenically unsaturated carboxylic acid of 3-5 carbon atoms in which the carboxyl groups have been at least partially neutralized with Na$^+$ or K$^+$ cations, and

(b) 0.5 to 8% based on the weight of the polyester of a thermally degraded polyolefin having repeat units from at least one olefin monomer having 2 to 6 carbon atoms and a weight average molecular weight of 1000-20,000.

2. Molding composition according to Claim 1 wherein said polyester comprises poly(ethylene terephthalate).

3. Molding composition according to Claim 1 wherein said polyester comprises poly(butylene terephthalate).

4. Molding composition according to Claim 1 wherein said polyester comprises poly(cyclohexylene dimethylene terephthalate).

5. Molding composition according to Claim 1 which comprises the sodium or potassium salt of a copolymer of ethylene and acrylic acid.

6. Molding composition according to Claim 1 which comprises the sodium or potassium salt of a copolymer of ethylene and methacrylic acid.

7. Molding composition according to Claim 1 in which said polyolefin is thermally degraded polyethylene.

8. Molding composition according to Claim 1 in which said polyolefin is thermally degraded polypropylene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 368 283 (K. KISHIDA et al.)<br>* Claims 2,5-6,11 * | 1-2,7 | C 08 L  67/02<br>C 08 K   5/09  //<br>(C 08 L  67/02<br>C 08 L  23:00<br>C 08 L  23:02 ) |
| X | GB-A-2 075 032 (TEIJIN LTD)<br>* Claims 1-6,9-12,14; page 3, lines 50-54 * | 1-2,5-8 | |
| Y | EP-A-0 288 398 (EASTMAN KODAK CO.)<br>* Claims 1-3,8,11,15-16; page 4, line 35 - page 5, line 9 * | 1-8 | |
| Y | EP-A-0 238 140 (AKZO N.V.)<br>* Claims 1-3,7,13; page 7, line 7 - page 8, line 5; page 11, lines 1-14 * | 1-8 | |
| A | EP-A-0 096 947 (E.I. DU PONT DE NEMOURS AND CO.)<br>* Claims 1-4 * | 1-2,5-6 | |
| D,A | US-E-  32 334 (E.J. DEYRUP)<br>* Claims 1-4,8,13-14; column 3, lines 3-28 * | 1-2,5-6 | TECHNICAL FIELDS SEARCHED (Int. Cl.5)<br><br>C 08 K<br>C 08 L |

The present search report has been drawn up for all claims

| Place of search | Date of completion of the search | Examiner |
|---|---|---|
| THE HAGUE | 12-09-1990 | MIAO K.Y-P. |